# EUROPÄISCHE PATENTSCHRIFT

(11) **EP 3 445 637 B1**
(45) Veröffentlichungstag und Bekanntmachung des Hinweises auf die Patenterteilung: **06.10.2021**
(21) Anmeldenummer: 17721538.1
(22) Anmeldetag: 18.04.2017
(51) Int. Cl.: B62D 1/16, B62D 1/20

(54) **DICHTUNGSVORRICHTUNG**
SEALING DEVICE
DISPOSITIF D'ÉTANCHÉITÉ

(30) Priorität: 20.04.2016 DE 102016206723
(43) Veröffentlichungstag der Anmeldung: 27.02.2019
(73) Patentinhaber: thyssenkrupp Presta AG, 9492 Eschen (LI); thyssenkrupp AG, 45143 Essen (DE)
(72) Erfinder: WALSER, Michael, Cholula 72164 (MX)
(74) Vertreter: thyssenkrupp Intellectual Property GmbH
(86) Internationale Anmeldenummer: PCT/EP2017/059112
(87) Internationale Veröffentlichungsnummer: WO 2017/182430

(56) Entgegenhaltungen:
- DE-A1-102011 108 688
- JP-A- 2014 129 004
- JP-U- H0 187 960

## Beschreibung

Die Erfindung betrifft eine Dichtungsvorrichtung zur Abdichtung einer Öffnung einer den Motorraum vom Fahrgastraum eines Kraftfahrzeugs trennenden Querwand, durch die eine Lenkzwischenwelle der Fahrzeuglenkung hindurchgeführt ist, mit einem die Öffnung abdeckenden und die Lenkzwischenwelle umschließenden Dichtkörper aus elastischem Material, der mit einem ersten Endbereich an der Querwand befestigt ist und mit einem zweiten Endbereich an einer äußeren Umfangsfläche einer auf der Lenkzwischenwelle befestigten und mit der Lenkzwischenwelle drehbaren Dichtungshülse dichtend anliegt.

Eine derartige Dichtungsvorrichtung ist aus der DE 198 57 392 A1 bekannt. Ein Dichtungsbalg ist einerseits an einer Spritzwand befestigt und liegt andererseits gleitend an einer Hülse an, welche an einem Lenkwellenabschnitt mit gewellter Außenfläche fixiert ist. Nachteilig daran ist die aus mehreren Teilen und Materialien kompliziert aufgebaute Hülse und deren aufwändige Fixierung auf der Lenkwelle.

Aus der DE 10 2007 031 395 A1 ist ebenfalls eine Spritzwanddurchführung einer Lenkwelle bekannt, wobei ein Dichtungsbalg mit einer Hülse zusammenwirkt. Nachteil dieser Lösung ist es, dass die Hülse aus vielen einzelnen Komponenten besteht. Aus der DE 10 2011 108 688 A1 ist ebenfalls eine gattungsgemäße Dichtungsanordnung bekannt, welche den Oberbegriff der unabhängigen Ansprüche 1 und 7 offenbart.

Aufgabe der Erfindung ist es, eine verbesserte Abdichtung für eine Spritzwanddurchführung bereitzustellen, die einen einfachen Aufbau aufweist und gleichzeitig in einer einfachen Weise auf der Lenkwelle fixierbar ist und einfach im Kraftfahrzeug montierbar ist.

Erfindungsgemäß wird diese Aufgabe dadurch gelöst, dass die Dichtungshülse eine Innenmantelfläche mit radial nach innen ragenden Vorsprüngen aufweist, die durch Aufpressen auf eine Außenmantelfläche der Lenkzwischenwelle mit dieser verbunden ist. Die erfindungsgemäße Dichtungshülse kann mit Vorteil als einstückiges Formteil ausgestaltet sein, welches mit geringem Fertigungsaufwand hergestellt werden kann. Die Montage der erfindungsgemäßen Dichtungshülse erfolgt durch einfaches Aufpressen auf die Lenkzwischenwelle, ohne dass beispielsweise zwei Hülsenkörper miteinander verschraubt werden müssten.

Besonders vorteilhaft ist es, wenn die Dichtungshülse aus Kunststoff besteht. Dieses Material erleichtert die kostengünstige Herstellung der Dichtungshülse beispielsweise im Spritzgussverfahren. Des Weiteren kann die Härte und Elastizität des Kunststoffmaterials an den vorliegenden Verwendungszweck der Dichtungshülse angepasst werden, sodass diese auf einfache Weise auf die Lenkzwischenwelle aufgepresst werden kann ohne zu reißen und anschließend die Dichtungshülse auf der Lenkzwischenwelle fest genug klemmt, um beim Betrieb des Fahrzeugs nicht abzurutschen.

In Weiterbildung der Erfindung ist vorgesehen, dass die Lenkzwischenwelle einen konischen Abschnitt aufweist, der in die genannte Außenmantelfläche übergeht, sodass die radialen Vorsprünge der Dichtungshülse beim Aufpressen über den konischen Abschnitt schiebbar sind. Dabei wird die Dichtungshülse radial elastisch aufgeweitet, sodass sie auf der Außenmantelfläche reibschlüssig fixiert ist. Der konische Abschnitt der Lenkzwischenwelle erleichtert den Aufpressvorgang.

Die Erfindung wird noch verbessert, indem die radialen Vorsprünge in einem ersten axialen Endabschnitt der Innenmantelfläche über deren Innenumfang verteilt angeordnet sind und die genannte Außenmantelfläche der Lenkzwischenwelle mit einer umlaufenden Ringnut versehen ist, in die die Vorsprünge einrasten. Durch diese Maßnahme wird die Befestigung der Dichtungshülse auf der Lenkzwischenwelle in der korrekten Position erleichtert und der Halt verbessert.

In Ausgestaltung der Erfindung ist die Dichtungshülse in einem zweiten axialen Endabschnitt der Innenmantelfläche mit radial nach innen vorstehenden Federzungen versehen, die in parallel zur Drehachse auf der Außenseite der Lenkzwischenwelle verlaufende Vertiefungen eingreifen. Durch diese Maßnahme wird einerseits der nicht im Klemmeingriff mit der Lenkzwischenwelle stehende zweite Endabschnitt der Dichtungshülse radial zentriert bzw. fixiert und andererseits drehfest mit der Lenkzwischenwelle verbunden, sodass ein höheres Drehmoment übertragen werden kann. Die auf der Außenseite der Lenkzwischenwelle verlaufenden Vertiefungen sind aus anderen konstruktiven Gründen ohnehin vorhanden und müssen für die Realisierung der oben genannten Maßnahme nicht zusätzlich eingebracht werden.

Die Fixierung der Dichtungshülse auf der Lenkzwischenwelle wird weiter verbessert, indem jeweils zwei paarweise benachbart angeordnete Federzungen in eine Vertiefung eingreifen. Dabei liegen die paarweise benachbarten Federzungen an gegenüberliegenden Flanken der Vertiefung federnd an, so dass die Dichtungshülse spielfrei auf der Lenkzwischenwelle fixiert ist und nicht klappern kann.

Gelöst wird die Aufgabe ebenfalls durch ein Verfahren zur Abdichtung eines Durchtritts einer Lenkzwischenwelle durch eine Querwand eines Kraftfahrzeugs, wobei die Lenkzwischenwelle mit einer Dichtungshülse und dem Dichtkörper versehen ist und mit der Dichtungshülse und dem Dichtkörper durch eine Öffnung in der Querwand von einer Fahrgastraumseite des Fahrzeugs her eingefahren wird, wobei der Dichtkörper an der Querwand befestigt wird.

Dadurch, dass die Lenkzwischenwelle vor dem Hindurchführen durch die Öffnung in der Querwand sowohl mit der Dichtungshülse als auch die Dichtkörper versehen ist, kann eine einfache und zeitsparende Montage im Fahrzeug realisiert werden, da die Lenkzwischenwelle zusammen mit der Dichtungshülse und dem Dichtkörper eine Baugruppe bildet, die in einem Montageschritt durch die Öffnung der Querwand geschoben wird. Ist korrekte Montageposition erreicht, so wird der Dichtkörper mit der Querwand gekoppelt, in dem ein erster Endbereich des Dichtkörpers mit der Querwand dichtend verbunden wird.

Dabei weist erfindungsgemäß die Dichtungshülse eine Innenmantelfläche mit radial nach innen ragenden Vorsprüngen auf, die auf eine Außenmantelfläche der Lenkzwischenwelle aufgepresst wird.

Ein Ausführungsbeispiel der Erfindung wird nachfolgend anhand der Zeichnungen näher erläutert. Die Figuren zeigen im Einzelnen:
- Figur 1:: eine schematische Darstellung einer Lenkvorrichtung für Kraftfahrzeuge mit durch eine Querwand hindurchgehender Lenkzwischenwelle;
- Figur 2:: eine Lenkzwischenwelle mit Dichtungskörper und Dichtungshülse im zusammengebauten Zustand;
- Figur 3:: die Bauteile aus Figur 2 vor dem Zusammenbau;
- Figur 4:: eine geschnittene Darstellung einer Lenkzwischenwelle mit der erfindungsgemäßen Dichtungsvorrichtung;
- Figur 5:: eine geschnittene Darstellung einer Lenkzwischenwelle mit noch nicht vollständig aufgepresster Dichtungshülse;
- Figur 6:: einen Querschnitt einer Lenkzwischenwelle gemäß Linie VI- VI aus Figur 5;
- Figur 7:: eine perspektivische Darstellung einer Dichtungshülse;
- Figur 8:: eine perspektivische Darstellung des Innenraums einer aufgeschnittenen Dichtungshülse;
- Figur 9:: eine Seitenansicht einer erfindungsgemäßen Dichtungshülse.

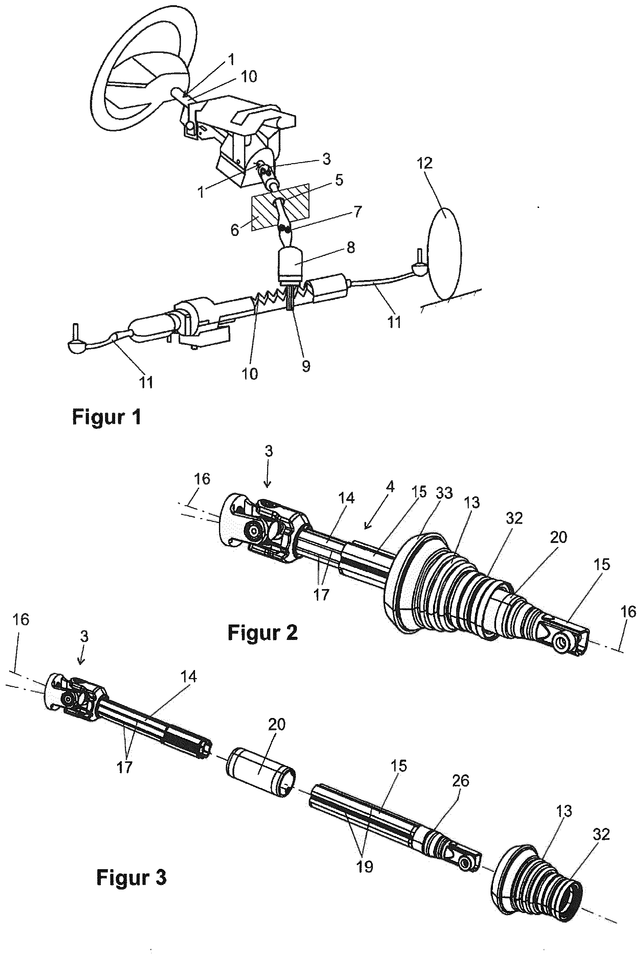

In Figur 1 erkennt man eine Lenkvorrichtung für ein Kraftfahrzeug, bei der eine Lenkwelle 1 an einem Ende mit einem Lenkrad 2 und an ihrem anderen Ende über ein als Universalgelenk ausgebildetes Drehgelenk 3 mit einer Lenkzwischenwelle 4 verbunden ist. Die Lenkzwischenwelle 4 ist durch eine Öffnung 5 einer als Spritzwand ausgebildeten Querwand 6 hindurchgeführt, welche den Fahrgastraum des Fahrzeugs vom Motorraum abtrennt. Über ein weiteres Drehgelenk 7 ist die Lenkzwischenwelle 4 mit einem Lenkgetriebe 8 verbunden, welches über ein Ritzel 9 auf eine Zahnstange 10 einwirkt. Die Zahnstange wird je nach gewünschter Lenkrichtung nach links oder rechts verschoben. Die Bewegung wird über zwei Spurstangen 11 auf die gelenkten Fahrzeugräder 12 übertragen, von denen in Figur 1 nur das linke Vorderrad dargestellt ist.

In Figur 2 sieht man die Lenkzwischenwelle 4 mit dem Drehgelenk 3 und einem Dichtkörper 13, der hier als Gummibalg ausgestaltet ist. Die Lenkzwischenwelle 4 besteht aus zwei teleskopartig ineinander geschobenen Teilen, wobei ein inneres Lenkwellenteil 14 in einem äußeren Lenkwellenteil 15 drehmomentenschlüssig steckt und gegenüber diesem in Richtung der Drehachse 16 der Lenkzwischenwelle 4 verschiebbar angeordnet ist. Das innere Lenkwellenteil 14 ist auf seiner Außenseite mit parallel zur Drehachse 16 verlaufenden Nuten 17 versehen, in welche radial nach innen ragenden, ebenfalls längs der Drehachse 16 verlaufende Grate 18 des äußeren Lenkwellenteil 15 eingreifen, sodass das innere Lenkwellenteil 14 mit dem äußeren Lenkwellenteil 15 auch bei axialer Verschiebung gegeneinander drehfest verbunden sind, um so das Lenkmoment zu übertragen. Die Grate 18 sind in das Material des äußeren Lenkwellenteils 15 eingeformt, wobei am äußeren Umfang des äußeren Lenkwellenteils 15 Vertiefungen 19 entstehen, die ebenfalls in Richtung der Drehachse 16 verlaufen.

In allen Figuren 2 bis 9 erkennt man eine erfindungsgemäße Dichtungshülse 20, die als einstückiges Spritzgussteil aus Kunststoff hergestellt ist. An einer Innenmantelfläche 21 der Dichtungshülse 20 sind Vorsprünge 22 vorgesehen, die radial nach innen vorstehen. Die Vorsprünge 22 befinden sich in einem ersten axialen Endabschnitt 23 der Innenmantelfläche 21 und es sind insgesamt vier Vorsprünge 22 über den Innenumfang verteilt angeordnet.

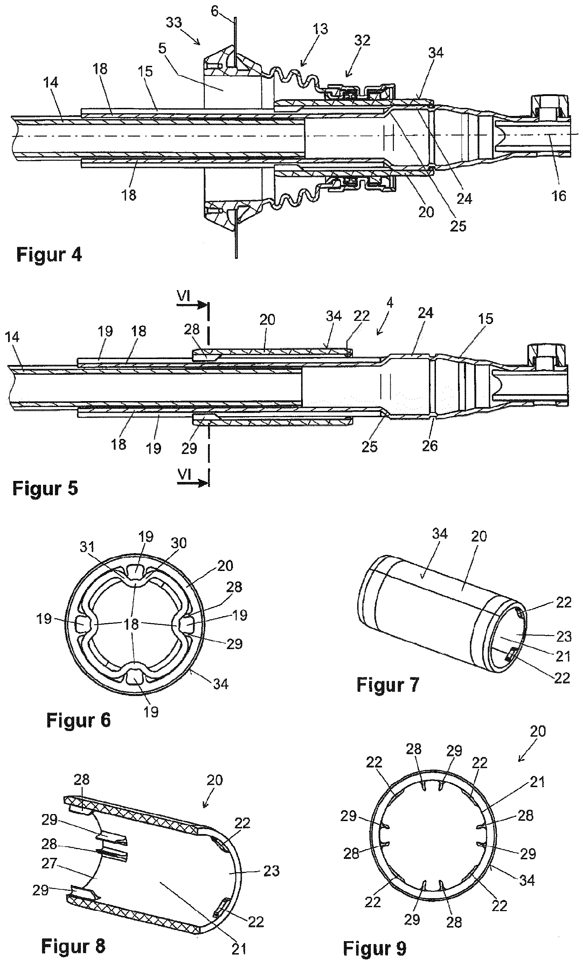

Die Vorsprünge 22 dienen zur Fixierung der Dichtungshülse 20 auf dem äußeren Lenkwellenteil 15 der Lenkzwischenwelle 4. Dabei wird die Dichtungshülse 20 aus der in Figur 3 veranschaulichten Position in Richtung der Drehachse 16 auf das äußere Lenkwellenteil 15 geschoben, bis sie die in den Figuren 2 oder 4 gezeigte Position einnimmt. Dabei kommen die Vorsprünge 22 mit der Außenmantelfläche 24 des äußeren Lenkwellenteils 15 in Klemmeingriff. Die hier als Klemmabschnitt dienende Außenmantelfläche 24 ist im Durchmesser etwas größer ausgestaltet als der mit dem inneren Lenkwellenteil 14 zusammenwirkende Abschnitt des äußeren Lenkwellenteil 15. Um das Aufpressen der Dichtungshülse 20 auf den Klemmabschnitt 24 zu erleichtern, geht der Klemmabschnitt 24 in einen konischen Abschnitt 25 über, der seinerseits in den mit dem inneren Lenkwellenteil 14 zusammenwirkenden Abschnitt geringeren Durchmessers des äußeren Lenkwellenteils 15 übergeht. Beim Aufpressen der Dichtungshülse 20 wird diese über den Abschnitt mit geringerem Durchmesser herangeführt und trifft mit ihren Vorsprüngen 22 auf den konischen Abschnitt 25. Wird die Aufpressbewegung weitergeführt, so weitet sich die Dichtungshülse 20 in ihrem ersten axialen Endabschnitt 23 geringfügig auf, wobei die Vorsprünge 22 auf die Außenmantelfläche 24 des Klemmabschnitts des äußeren Lenkwellenteils 15 aufgeschoben werden, wo sie aufgrund der Elastizität der Dichtungshülse 20 in festem Reibschluss mit dem äußeren Lenkwellenteil 15 verbleiben.

Um die axiale Position der Dichtungshülse 20 auf dem äußeren Lenkwellenteil 15 zu fixieren kann dieses zusätzlich mit einer umlaufenden Ringnut 26 versehen sein, in welcher die Vorsprünge 22 der Dichtungshülse 20 einrasten.

Wie man am besten in den Figuren 6, 8 und 9 erkennt, ist die Dichtungshülse 20 in einem zweiten axialen Endabschnitt 27 mit radial nach innen vorstehenden Federzungen 28, 29 versehen, die in parallel zur Drehachse 16 auf der Außenseite des äußeren Lenkwellenteils 15 der Lenkzwischenwelle 4 verlaufende Vertiefungen 19 eingreifen. Die Federzungen 28, 29 sind paarweise benachbart angeordnet und liegen bei montierter Dichtungshülse 20 an den Flanken 30, 31 der Vertiefungen 19 an. Dadurch wird die Dichtungshülse 20 einerseits zentriert gehalten und bleibt andererseits in Drehrichtung spielfrei mit dem äußeren Lenkwellenteil 15 verbunden, sodass sie Drehmoment übertragen kann und nicht klappert.

Nachdem die Dichtungshülse 20 auf der Lenkzwischenwelle 4 montiert ist, wird der Dichtungskörper 13 montiert. Der Dichtungskörper umschließt die Lenkzwischenwelle 4 oder genauer gesagt die Drehachse 16 der Lenkzwischenwelle 4 vollständig. Hierfür ist der Dichtungskörper 13 an seinem mit der Dichtungshülse 20 zusammenwirkenden zweiten Endbereich 32 als ringförmiges Dichtungsteil 32 ausgestaltet, welches an einer äußeren Umfangsfläche 34 der Dichtungshülse 20 dichtend anliegt, wobei sich die Dichtungshülse 20 innerhalb des Dichtungsteils 32 drehen kann. An dem anderen Ende des Dichtungskörpers 13 ist ein mit der Querwand 6 in Verbindung stehender erster Endbereich 33 des Dichtungskörpers 13 angeordnet. Der Endbereich 33 klemmt die Ränder der Öffnung 5 der Querwand 6 ein und dichtet so die Öffnung 5 ab.

Die erfindungsgemäße Dichtungshülse 20 kann auf einfache Weise beispielsweise im Spritzgussverfahren aus Kunststoff hergestellt und ebenso einfach durch Aufpressen auf die Lenkzwischenwelle montiert werden. Dadurch unterscheidet sich die vorliegende Erfindung von mehrteiligen und aufwändig zu montierenden Dichtungshülsen des Standes der Technik.

### BEZUGSZEICHENLISTE

- 1: Lenkwelle
- 2: Lenkrad
- 3: Drehgelenk
- 4: Lenkzwischenwelle
- 5: Öffnung
- 6: Querwand
- 7: Drehgelenk
- 8: Lenkgetriebe
- 9: Ritzel
- 10: Zahnstange
- 11: Spurstange
- 12: Fahrzeugrad
- 13: Dichtkörper
- 14: inneres Lenkwellenteil
- 15: äußeres Lenkwellenteil
- 16: Drehachse
- 17: Nuten
- 18: Grate
- 19: Vertiefungen
- 20: Dichtungshülse
- 21: Innenmantelfläche
- 22: Vorsprünge
- 23: erster axialer Endabschnitt
- 24: Klemmabschnitt
- 25: konischer Abschnitt
- 26: Ringnut
- 27: zweiter axialer Endabschnitt
- 28: Federzunge
- 29: Federzunge
- 30: Flanke
- 31: Flanke
- 32: zweiter Endbereich, Dichtungsteil
- 33: erster Endbereich
- 34: äußere Umfangsfläche

## Patentansprüche

1. Dichtungsvorrichtung zur Abdichtung einer Öffnung (5) einer den Motorraum vom Fahrgastraum eines Kraftfahrzeugs trennenden Querwand (6), durch die eine Lenkzwischenwelle (4) der Fahrzeuglenkung hindurchgeführt ist, mit einem die Öffnung (5) abdeckenden und die Lenkzwischenwelle (4) umschließenden Dichtkörper (13) aus elastischem Material, der mit einem ersten Endbereich (33) an der Querwand (6) befestigt ist und mit einem zweiten Endbereich (32) an einer äußeren Umfangsfläche (34) einer auf der Lenkzwischenwelle (4, 15) befestigten und mit der Lenkzwischenwelle (4, 15) drehbaren Dichtungshülse (20) dichtend anliegt, **dadurch gekennzeichnet, dass** die Dichtungshülse (20) eine Innenmantelfläche (21) mit radial nach innen ragenden Vorsprüngen (22) aufweist, die durch Aufpressen auf eine Außenmantelfläche (24) der Lenkzwischenwelle (4, 15) mit dieser verbunden ist.

2. Dichtungsvorrichtung nach Anspruch 1, **dadurch gekennzeichnet, dass** die Dichtungshülse (20) aus Kunststoff besteht.

3. Dichtungsvorrichtung nach Anspruch 1 oder 2, **dadurch gekennzeichnet, dass** die Lenkzwischenwelle (4, 15) einen konischen Abschnitt (25) aufweist, der in die Außenmantelfläche (24) übergeht, sodass die radialen Vorsprünge (22) der Dichtungshülse (20) beim Aufpressen über den konischen Abschnitt (25) schiebbar sind.

4. Dichtungsvorrichtung nach einem der vorhergehenden Ansprüche, **dadurch gekennzeichnet, dass** die radialen Vorsprünge (22) in einem ersten axialen Endabschnitt (23) der Innenmantelfläche (21) über deren Innenumfang verteilt angeordnet sind und dass die Außenmantelfläche (24) der Lenkzwischenwelle (4, 15) mit einer umlaufenden Ringnut (26) versehen ist, in die die Vorsprünge (22) einrasten.

5. Dichtungsvorrichtung nach einem der vorhergehenden Ansprüche, **dadurch gekennzeichnet, dass** die Dichtungshülse (20) in einem zweiten axialen Endabschnitt (27) der Innenmantelfläche (21) mit radial nach innen vorstehenden Federzungen (28, 29) versehen ist, die in parallel zur Drehachse (16) auf der Außenseite der Lenkzwischenwelle (4,15) verlaufende Vertiefungen (19) eingreifen.

6. Dichtungsvorrichtung nach Anspruch 5, **dadurch gekennzeichnet, dass** jeweils zwei paarweise benachbart angeordnete Federzungen (28, 29) in eine Vertiefung (19) eingreifen.

7. Verfahren zur Abdichtung eines Durchtritts einer Lenkzwischenwelle (4) durch eine Querwand (6) eines Kraftfahrzeugs, wobei die Lenkzwischenwelle (4) mit einer Dichtungshülse (20) und dem Dichtkörper (13) versehen ist und mit der Dichtungshülse (20) und dem Dichtkörper (13) durch eine Öffnung (5) in der Querwand (6) von einer Fahrgastraumseite des Fahrzeugs her eingefahren wird, wobei der Dichtkörper (13) an der Querwand (6) befestigt wird, **dadurch gekennzeichnet, dass** die Dichtungshülse (20) eine Innenmantelfläche (21) mit radial nach innen ragenden Vorsprüngen (22) aufweist, die auf eine Außenmantelfläche (24) der Lenkzwischenwelle (4, 15) aufgepresst wird.

## Claims

1. A sealing device for sealing an opening (5) of a transverse wall (6) which separates the engine compartment from the passenger compartment of a motor vehicle and through which an intermediate steering shaft (4) of the vehicle steering system is guided, having a sealing member (13) of resilient material which covers the opening (5) and which surrounds the intermediate steering shaft (4) and which is secured with a first end region (33) to the transverse wall (6) and which lies in a sealing manner with a second end region (32) against an outer peripheral face (34) of a sealing sleeve (20) which is secured to the intermediate steering shaft (4, 15) and which can be rotated with the intermediate steering shaft (4, 15), **characterized in that** the sealing sleeve (20) comprises an inner covering face (21) which has radially inwardly protruding projections (22) and which by pressing onto an outer covering face (24) of the intermediate steering shaft (4, 15) is connected thereto.

2. The sealing device as claimed in claim 1, **characterized in that** the sealing sleeve (20) comprises plastics material.

3. The sealing device as claimed in claim 1 or 2, **characterized in that** the intermediate steering shaft (4, 15) comprises a conical portion (25) which merges into the outer covering face (24) so that the radial projections (22) of the sealing sleeve (20) can be pushed over the conical portion (25) during pressing.

4. The sealing device as claimed in one of the preceding claims, **characterized in that** the radial projections (22) in a first axial end portion (23) of the inner covering face (21) are arranged so as to be distributed over the inner periphery thereof and **in that** the outer covering face (24) of the intermediate steering shaft (4, 15) is provided with a peripheral annular groove (26) in which the projections (22) engage.

5. The sealing device as claimed in one of the preceding claims, **characterized in that** the sealing sleeve (20) is provided in a second axial end portion (27) of the inner covering face (21) with radially inwardly projecting resilient tongues (28, 29) which engage in recesses (19) which extend parallel with the rotation axis (16) on the outer side of the intermediate steering shaft (4, 15).

6. The sealing device as claimed in claim 5, **characterized in that** in each case two resilient tongues (28, 29) which are arranged in an adjacent manner in pairs engage in a recess (19).

7. A method for sealing a passage of an intermediate steering shaft (4) through a transverse wall (6) of a motor vehicle, wherein the intermediate steering shaft (4) is provided with a sealing sleeve (20) and the sealing member (13) and with the sealing sleeve (20) and the sealing member (13) is introduced through an opening (5) in the transverse wall (6) from a passenger compartment side of the vehicle, wherein the sealing member (6) is secured to the transverse wall (6), **characterized in that** the sealing sleeve (20) comprises an inner covering face (21) with radially inwardly protruding projections (22) which are pressed onto an outer covering face (24) of the intermediate steering shaft (4, 15).

## Revendications

1. Dispositif d'étanchéité servant à rendre étanche une ouverture (5) d'une paroi transversale (6) séparant le compartiment-moteur de l'habitacle d'un véhicule automobile, paroi transversale à travers laquelle un arbre intermédiaire de direction (4) de la direction de véhicule est guidé, comportant un corps d'étanchéité (13) recouvrant l'ouverture (5), entourant l'arbre intermédiaire de direction (4) et constitué d'une matière élastique, lequel corps d'étanchéité est fixé à la paroi transversale (6) par une première région d'extrémité (33) et s'applique de manière étanche, par une deuxième région d'extrémité (32), contre une surface périphérique extérieure (34) d'un manchon d'étanchéité (20) fixé sur l'arbre intermédiaire de direction (4, 15) et pouvant tourner avec l'arbre intermédiaire de direction (4, 15), **caractérisé en ce que** le manchon d'étanchéité (20) comprend une surface d'enveloppe intérieure (21) dotée de saillies (22) faisant saillie radialement vers l'intérieur, lesquelles sont reliées à l'arbre intermédiaire de direction (4, 15) par pressage sur une surface d'enveloppe extérieure (24) de celui-ci.

2. Dispositif d'étanchéité selon la revendication 1, **caractérisé en ce que** le manchon d'étanchéité (20) est constitué de matière synthétique.

3. Dispositif d'étanchéité selon la revendication 1 ou 2, **caractérisé en ce que** l'arbre intermédiaire de direction (4, 15) comprend une partie conique (25) qui se prolonge par la surface d'enveloppe extérieure (24), de sorte que les saillies radiales (22) du manchon d'étanchéité (20) puissent être poussées sur la partie conique (25) lors du pressage.

4. Dispositif d'étanchéité selon l'une des revendications précédentes, **caractérisé en ce que** les saillies radiales (22) sont disposées de manière répartie dans une première partie d'extrémité axiale (23) de la surface d'enveloppe intérieure (21) sur sa périphérie intérieure et **en ce que** la surface d'enveloppe extérieure (24) de l'arbre intermédiaire de direction (4, 15) est dotée d'une rainure annulaire périphérique (26) dans laquelle les saillies (22) s'encliquètent.

5. Dispositif d'étanchéité selon l'une des revendications précédentes, **caractérisé en ce que** le manchon d'étanchéité (20) est, dans une deuxième partie d'extrémité axiale (27) de la surface d'enveloppe intérieure (21), doté de languettes élastiques (28, 29) faisant saillie radialement vers l'intérieur, lesquelles viennent en prise dans des évidements (19) s'étendant parallèlement à l'axe de rotation (16) sur le côté extérieur de l'arbre intermédiaire de direction (4, 15).

6. Dispositif d'étanchéité selon la revendication 5, **caractérisé en ce que** respectivement deux languettes élastiques (28, 29) disposées de manière adjacente par paires viennent en prise dans un évidement (19).

7. Procédé servant à rendre étanche un passage d'un arbre intermédiaire de direction (4) à travers une paroi transversale (6) d'un véhicule automobile, l'arbre intermédiaire de direction (4) étant doté d'un manchon d'étanchéité (20) et du corps d'étanchéité (13) et étant introduit avec le manchon d'étanchéité (20) et le corps d'étanchéité (13) à travers une ouverture (5) dans la paroi transversale (6) à partir d'un côté d'habitacle du véhicule, le corps d'étanchéité (13) étant fixé à la paroi transversale (6), **caractérisé en ce que** le manchon d'étanchéité (20) comprend une surface d'enveloppe intérieure (21) dotée de saillies (22) faisant saillie radialement vers l'intérieur, lesquelles sont pressées sur une surface d'enveloppe extérieure (24) de l'arbre intermédiaire de direction (4, 15).
